# EUROPEAN PATENT APPLICATION

(11) **EP 4 617 628 A1**
(43) Date of publication of application: **17.09.2025**
(21) Application number: 25150717.4
(22) Date of filing: 08.01.2025
(51) Int. Cl.: G01C 23/00

(54) **CONFIGURATION SENSITIVE RANGE RINGS AND GLIDE RINGS**

(30) Priority: 08.03.2024 US 202418600371
(71) Applicant: Rockwell Collins, Inc., Cedar Rapids, IA 52498 (US)
(72) Inventor: KRENZ, Michael J., Roscoe, IL (US); THOMPSON, Bradley R., Merritt Island, FL (US)
(74) Representative: Dehns

(57) **Abstract**

A system for generating and displaying one or more range rings on an aircraft includes a processor (106), a display device (108), a communication device (118), and computerreadable memory. The display device (108) contains a user interface. In operation, the system receives a user configuration input via the user interface of the display device (108). The system receives aircraft data from a connected aircraft avionics system via the communication device (118). The system calculates one or more ranges of the aircraft based upon the user configuration input and/or the aircraft data. The system generates one or more range rings based upon the one or more ranges of the aircraft, wherein the one or more range rings are visual depictions of the one or more ranges of the aircraft. The system displays the one or more range rings on the display device (108).

## Description

### BACKGROUND

The range of an aircraft can be determined by a variety of factors including fuel reserves, airspeed, altitude, and the like. The range of the aircraft can be of particular importance in an emergency landing condition, wherein the aircraft operator needs to know the range of the aircraft in order to determine a safe landing site. Further, it may be prudent for an aircraft operator to know the range of an aircraft across a variety of possible conditions, even in non-emergency situations. Thus, a system for determining the range of an aircraft across a variety of conditions and configurations is desirable.

### SUMMARY

A system for generating and displaying one or more range rings on an aircraft includes a processor. The system further includes a display device operably connected to the processor, the display device comprising a user interface. The system further includes a communication device operably connected to the processor. The system further includes computer-readable memory operably connected to the processor, the computer-readable memory encoded with instructions that, when executed by the processor, cause the system to perform the following steps. The system receives a user configuration input via the user interface of the display device. The system calculates one or more ranges of the aircraft based upon the user configuration input and the aircraft data. The system generates one or more range rings based upon the one or more ranges of the aircraft, wherein the one or more range rings are visual depictions of the one or more ranges of the aircraft. The system displays the one or more range rings on the display device.

A method for generating and displaying one or more range rings on an aircraft includes receiving a user configuration input via a user interface of a display device. The method further includes receiving aircraft data from an aircraft avionics system of the aircraft, the aircraft avionics system being operably connected to a communication device. The method further includes calculating one or more ranges of the aircraft based upon the user configuration input and the aircraft data. The method further includes generating the one or more range rings based upon the one or more ranges of the aircraft, wherein the one or more range rings are visual depictions of the one or more ranges of the aircraft. The method further includes displaying the one or more range rings on the display device.

### BRIEF DESCRIPTION OF THE DRAWINGS

FIG. 1 is a diagram of a system for generating and displaying range rings.
FIG. 2A is an example embodiment of a plurality of displayed range rings based upon a landing gear configuration and an aircraft wing flap configuration.
FIG. 2B is an example embodiment of a plurality of displayed range rings based upon a speed brake configuration.
FIG. 3 is an example embodiment of a plurality of displayed glide rings.
FIG. 4 is a flowchart depicting a method for generating and displaying one or more range rings.

### DETAILED DESCRIPTION

The techniques of this disclosure relate to generating and displaying range rings for an aircraft. The range ring display system creates and displays one or more range rings to a user (e.g., a pilot, co-pilot, or any other consumer of such information) via a display device based upon different aircraft conditions and/or configurations. Range rings can, for example, depict the aircraft range based upon current flight conditions, as determined by aircraft sensors, and communicated by a connected aircraft avionics system. Range rings can also, for example, depict the aircraft range based upon custom aircraft conditions and/or configurations as input by the user. Range rings can also, for example, depict a combination of current aircraft conditions and/or configurations and custom aircraft conditions and/or configurations. Range rings can also, for example, depict one or more glide rings, wherein the glide rings indicate the range of the aircraft when there is no engine thrust (e.g., in a case involving loss of power). The generation of multiple range rings and/or glide rings for custom parameters and/or current parameters helps to optimize overall aircraft performance, especially for long-range flights and in cases where an emergency landing is required after a loss of power.

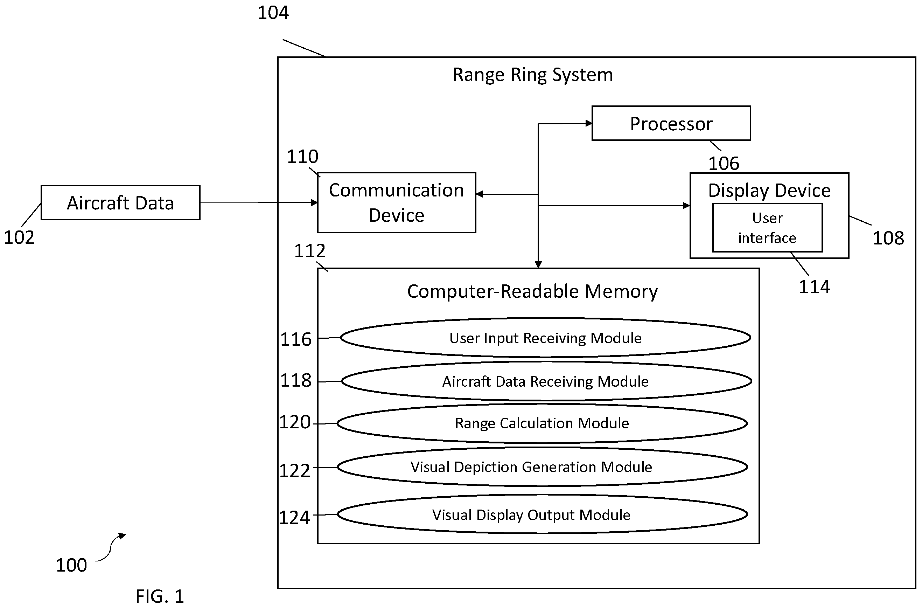

FIG. 1 is a diagram of system 100 for generating and displaying range rings. System 100 includes aircraft data module 102 and range ring system 104. Range ring system 104 includes processor 106, display device 108, communication device 110, and computer readable memory 112. Display device 108 includes user interface 114. Computer-readable memory 112 includes user input receiving module 116, aircraft data receiving module 118, range calculation module 120, visual depiction generation module 122, and visual display output module 124.

Processor 106, in some examples, is configured to implement functionality and/or process instructions for execution within system 100. For instance, processor 106 can be capable of processing instructions stored in computer-readable memory 112. Examples of processor 106 can include any one or more of a microprocessor, a controller, a digital signal processor (DSP), an application specific integrated circuit (ASIC), a field-programmable gate array (FPGA), or other equivalent discrete or integrated logic circuitry.

Computer-readable memory 112, in some examples, is described as computer-readable storage media. In some examples, a computer-readable storage medium includes a non-transitory medium. The term "non-transitory" indicates that the storage medium is not embodied in a carrier wave or a propagated signal. In certain examples, a non-transitory storage medium stores data that, over time, changes (e.g., in RAM or cache). In some examples, computer-readable memory 112 is a temporary memory, meaning that a primary purpose of computer-readable memory 112 is not long-term storage. Computer-readable memory 112, in some examples, is described as volatile memory, meaning that computer-readable memory 112 does not maintain stored contents when electrical power to computer-readable memory 112 is removed. Examples of volatile memories can include random access memories (RAM), dynamic random access memories (DRAM), static random access memories (SRAM), and other forms of volatile memories. In some examples, computer-readable memory 112 is used to store program instructions for execution by processor 106. Computer-readable memory 112, in one example, is used by software or applications to temporarily store information during program execution.

Computer-readable memory 112, in some examples, also includes one or more computer-readable storage media. Computer-readable memory 112 is configured to store larger amounts of information than volatile memory. Computer-readable memory 112 is further configured for long-term storage of information. In some examples, computer-readable memory 112 includes non-volatile storage elements. Examples of such non-volatile storage elements include, but are not limited to, magnetic hard discs, optical discs, flash memories, or forms of electrically programmable memories (EPROM) or electrically erasable and programmable (EEPROM) memories.

Display device 108 is an input and/or output device that enables a user to view an output of range ring system 104 and receive inputs via user interface 114. Display device 108 can include one or more of a sound card, a video graphics card, a speaker, a display device (such as a liquid crystal display (LCD), a light emitting diode (LED) display, an organic light emitting diode (OLED) display, etc.), a touchscreen, a keyboard, a mouse, a joystick, or other type of device for facilitating input and/or output of information in a form understandable to users, machines, or other computing devices.

Communication device 110 is an input and/or output device that enables range ring system 104 to electrically communicate with aircraft data module 102. Communication device 110 can include a network interface card (NIC), a modem, a bridge, a hub, and/or a router, which may communicate with other network-attached components via wired and/or wireless connections.

Aircraft data module 102 is operably connected to range ring system 104 via an operable connection between aircraft data module 102 and communication device 110. Processor 106, display device 108, communication device 110, and computer readable memory 112 are interconnected within range ring system 104.

In operation, computer readable memory 112 is encoded with instructions that are executed by processor 106. Computer readable memory 112 includes user input receiving module 116. User input receiving module 116 includes one or more programs containing instructions to receive a user input from user interface 114, wherein user interface 114 is displayed upon display device 108. Upon execution of user input receiving module 116, data (i.e., based upon a user input from user interface 114) is received by processor 106.

In some embodiments, user interface 114 can include input fields for a user to input aircraft conditions and/or configurations. Thus, for example, a user can, via user interface 114, input aircraft conditions such as airspeed, altitude, temperature, air pressure, and/or any other aircraft conditions. Further, for example, the user can, via user interface 114, input aircraft configurations such as the landing gear position, wing flap position, speed brake position, ram air turbine position, and/or any other aircraft configurations. Additionally, for example, the user can, via user interface 114, input additional parameters such as icing conditions resulting in ice buildup on the aircraft (e.g., reducing range), and/or any other additional parameters. Upon receiving the aircraft condition and/or the aircraft configuration inputs from the user, the data is transmitted to the processor.

In some embodiments, user interface 114 can include preset categories for the user to select from, wherein the preset categories represent a predefined aircraft status. Thus, one such predefined aircraft status can include a predefined altitude and/or a predefined airspeed. Another such predefined aircraft status can include a predefined aircraft configuration wherein the landing gear is deployed, and/or the wing flaps are activated. Another such predefined aircraft status can include the current flight conditions, wherein all the aircraft parameters and aircraft configuration elements are input as per the current status of the aircraft. The current status of the aircraft can be determined by data received from aircraft data module 102. Another such predefined aircraft status can include a long-range cruise condition, wherein such a condition is indicative of the longest possible range of the aircraft. Another such predefined aircraft status can include a situation in which an auxiliary power unit (APU) is operative and in use, and therefore consuming fuel. Another such predefined aircraft status can include a situation in which one of the aircraft engines is inoperative. Another such predefined aircraft status can include a situation in which a loss of cabin pressure has occurred.

In some embodiments, the preset categories for the user to select from can be combined (i.e., the user can select more than one preset category). In other embodiments, a preset category can be selected and parameters can thereafter be adjusted by the user. It is understood that the listed examples are merely intended to be illustrative and non-limiting, and other preset categories or custom defined conditions and/or configurations can be used.

Computer readable memory 112 includes aircraft data receiving module 118. Aircraft data receiving module 118 includes one or more programs containing instructions to receive aircraft data from aircraft data module 102 via communication device 110. Upon execution of aircraft data receiving module 118, data (i.e., from aircraft data module 102) is received by processor 106. Data received from aircraft data module 102 can be indicative of the current state of the aircraft as determined by a network of sensors and computers within an aircraft avionics system. In one example, aircraft data module 102 provides data indicative of altitude, airspeed, current landing gear status, current aircraft flap status, and current fuel reserve status.

Computer readable memory 112 includes range calculation module 120. Range calculation module 120 includes one or more programs containing instructions to calculate one or more ranges of the aircraft based upon user input received via user input receiving module 116 and aircraft data received via aircraft data receiving module 118. Upon execution of range calculation module 120, user input and/or aircraft data is used to calculate one or more ranges of the aircraft. In one illustrative example, the user can indicate, for example, that a range should be calculated for an altitude of 40,000 feet and an airspeed of 500 knots. The user can also indicate, for example, that a range should be calculated for a situation where the aircraft is gliding and the landing gear is stuck down. Thus, upon execution of range calculation module 120, processor 106 calculates a first range for the first set of conditions and/or configurations (e.g., an altitude of 40,000 feet and airspeed of 500 knots) and a second range for the second set of conditions (e.g., the aircraft is gliding and landing gear is down). In some embodiments, the range ring for the current flight conditions is also calculated. Such an example is merely intended to be illustrative and is non-limiting.

Computer readable memory 112 includes visual depiction generation module 122. Visual depiction generation module 122 includes one or more programs containing instructions to generate a visual depiction of the one or more ranges calculated via the execution of range calculation module 120. Upon execution of visual depiction generation module 122, processor 106 generates one or more range rings, wherein the one or more range rings are visual depictions of the one or more ranges. The one or more range rings can be depicted as an overlay such that the one or more range rings are displayed on the same image and with the same scale. Visual depiction generation module 122 can also include instructions to generate visual indicia of waypoints. Waypoints can include airports that are within range, or other structures of interest. The visual indicia of waypoints can also be depicted as an overlay such that the waypoints are depicted in relation to the range rings, thereby allowing a user to see whether the waypoint is within or outside of any of the one or more range rings.

Computer readable memory 112 includes visual display output module 124. Visual display output module 124 includes one or more programs containing instructions to display the visual depiction of the one or more ranges generated via execution of visual depiction generation module 122. Upon execution of visual display output module 124, the one or more range rings are displayed via display device 108. Display device 108 can be housed within the cockpit and additionally or alternatively can include tablets or an electronic flight bag (EFB).

System 100 provides various advantages. Primarily, system 100 allows for the calculation and display of multiple range rings based upon a variety of aircraft conditions and/or configurations. The aircraft conditions and/or configurations can be measured or otherwise determined by the current state of the aircraft or can be defined by the user as custom parameters. Considering such factors in the calculation of range rings can provide the user with a more accurate estimation of the range of the aircraft than simply the remaining fuel reserves. Additionally, system 100 is beneficial when the aircraft is gliding due to, for example, an emergency condition. The pilot can view the range of the aircraft via the range rings and also determine which waypoints (e.g., airports) are within range given a particular set of conditions. Thus, system 100 is beneficial for the user in a variety of situations.

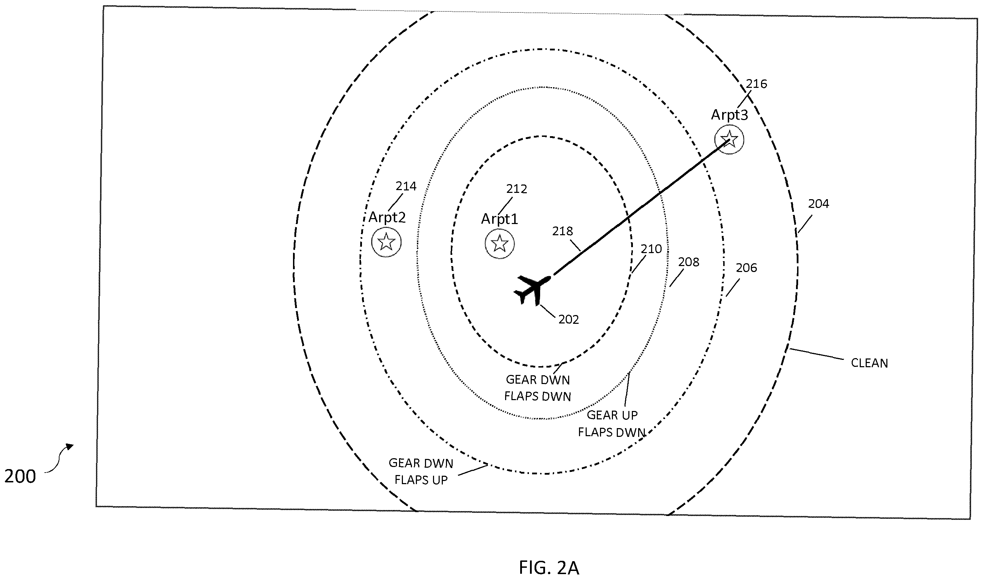

FIG. 2A is an example embodiment of a plurality of displayed range rings based upon a landing gear configuration and an aircraft wing flap configuration as shown on range ring display 200. Range ring display 200 can be, for example, an output shown on display device 108 of system 100. Range ring display 200 includes aircraft icon 202, range ring 204, range ring 206, range ring 208, range ring 210, waypoint 212, waypoint 214, waypoint 216, and trajectory line 218.

Range ring display 200 is intended to illustrate an example scenario wherein the user of system 100 designates that four range rings should be displayed. The four displayed range rings are indicative of various aircraft configurations involving the position of the landing gear and the aircraft wing flaps. Range ring 204 depicts a clean condition, wherein the landing gear is up (i.e., not deployed) and the aircraft wing flaps are up (i.e., not activated). Such a configuration minimizes the drag of the aircraft and hence produces the largest ring of range ring display 200, indicating that such a configuration has the longest range as compared to the other depicted range rings.

Range ring 206 depicts a condition in which the landing gear is deployed, and the aircraft wing flaps are up. In such a condition, the landing gear causes drag, whereas the aircraft wing flaps do not. Range ring 208 depicts a condition in which the landing gear is not deployed and the aircraft wing flaps are down. In such a condition, the aircraft wing flaps cause drag, whereas the landing gear does not. Range ring 210 depicts a condition in which the landing gear is deployed and the aircraft wing flaps are down. Out of the four depicted range rings, range ring 210 depicts the condition with the highest possible drag. Hence range ring 210 depicts the smallest of the possible range rings, indicating that such a configuration has the shortest range as compared to the other depicted range rings.

Aircraft icon 202 is indicative of a position of the aircraft. Trajectory line 218 indicates the trajectory of the aircraft. Waypoint 214 is indicative of an airport labeled Airport 2. Waypoint 212 is indicative of an airport labeled Airport 1. Waypoint 216 is indicative of an airport labeled Airport 3. The depicted range rings (i.e., range rings 204, 206, 208, and 210) indicate the range of the aircraft based on the conditions, and thus the position of the waypoints (i.e., waypoints 212, 214, and 216) relative to the range rings indicate which waypoints are reachable under which conditions.

As depicted, each of waypoints 212, 214, and 216 are within range ring 204. Thus, in the clean condition wherein the aircraft gear is not deployed and the aircraft wing flaps are up, any of waypoints 212, 214, and 216 are within the aircraft range. Waypoint 216, however, is outside range rings 206, 208, and 210. Thus, in conditions in which the landing gear is deployed, the aircraft flaps are down, or both, waypoint 216 would be out of range and a new waypoint would have to be selected, thus changing trajectory line 218.

Waypoint 214 is contained within range rings 204 and 206, but is external to range rings 208 and 210. Thus, waypoint 214 is reachable in conditions wherein the landing gear is not deployed and the aircraft wing flaps are up, or in conditions wherein the landing gear is deployed and the aircraft wing flaps are up. Waypoint 214 is not reachable in the conditions of range rings 208 (i.e., landing gear not deployed and aircraft wing flaps down) and 210 (i.e., landing gear deployed and aircraft wing flaps down).

Waypoint 212 is contained within all the depicted range rings. Thus, waypoint 212 is reachable in all conditions involving the landing gear configuration and the aircraft wing flaps configuration. Therefore, in a situation where the aircraft wing flaps are stuck in the down position, the aircraft operator would be informed that waypoint 212 is the only destination available to land the aircraft and can then change the trajectory of the aircraft from waypoint 216 to waypoint 212.

Range ring display 200 depicts an example output on display device 108 of system 100. An advantage of such an implementation is that the user of system 100 can easily determine the range of the aircraft in various conditions. In the implementation of range ring display 200, the user can easily determine how the aircraft landing gear and the aircraft wing flaps will affect the range of the aircraft. Thus, in a scenario where either the landing gear and/or the aircraft wing flaps are stuck in a deployed position, the aircraft operator can determine which waypoints are within range. Further, in a landing condition, the aircraft operator can use such information to determine when to deploy the landing gear and/or the aircraft wing flaps such that the aircraft does not overshoot the landing target and also does not fall short of the landing target.

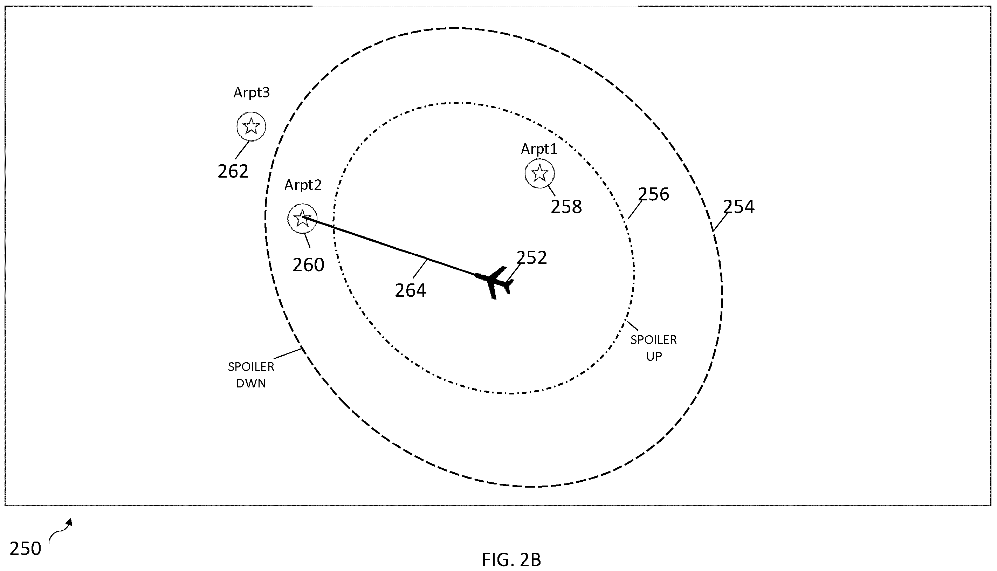

FIG. 2B is an example embodiment of a plurality of displayed range rings based upon a speed brake configuration as shown on range ring display 250. Range ring display 250 can be, for example, an output shown on display device 108 of system 100. Range ring display 250 includes aircraft icon 252, range ring 254, range ring 256, waypoint 258, waypoint 260, waypoint 262, and trajectory line 264.

Range ring display 250 is intended to illustrate an example scenario wherein the user of system 100 designates that two range rings should be displayed. The two displayed range rings are indicative of aircraft configurations involving the position of the speed brakes/spoilers. Range ring 254 depicts a clean condition, wherein the spoiler is down (i.e., not deployed). Such a configuration minimizes the drag of the aircraft and hence produces the largest ring of range ring display 250. Range ring 256, conversely, depicts a condition in which the spoiler is up (i.e., deployed). In such a condition, the spoiler causes drag, Hence range ring 256 depicts the smallest of the range ring of range ring display 250.

Aircraft icon 252 is indicative of a position of the aircraft. Trajectory line 264 indicates the trajectory of the aircraft. Waypoint 260 is indicative of an airport labeled Airport 2. Waypoint 258 is indicative of an airport labeled Airport 1. Waypoint 262 is indicative of an airport labeled Airport 3. The depicted range rings (i.e., range rings 254 and 256) indicate the range of the aircraft based on the conditions, and thus the position of the waypoints (i.e., waypoints 258, 260, and 262) relative to the range rings indicate which waypoints are reachable under which conditions.

As depicted, waypoint 262 is outside the range of both range ring 254 and range ring 256. Thus, waypoint 262 is unreachable by aircraft 252 in either condition wherein the spoiler is up or wherein the spoiler is down. Waypoint 260 is within range ring 254 but external to range ring 256. Thus, waypoint 260 is reachable by aircraft 252 in a condition in which the spoiler is down. Waypoint 258 is within both range ring 254 and range ring 256. Thus, waypoint 258 is the only reachable waypoint by aircraft 252 in the condition where the spoiler is up.

The examples of range ring display 200 and range ring display 250 are intended to be examples of range rings, and it is understood that various other aircraft conditions can be considered when producing range rings to output via display device 108. For example, scenarios in which the ram air turbine position affects the range of the aircraft can be considered. In another example, icing conditions in which there is ice buildup on the wing(s) of the aircraft resulting in reduced range can also be considered. The preceding are merely intended to be examples, and it is understood that any number of aircraft conditions, configurations, and/or any other additional parameters can be considered in generating range rings.

Range ring display 200 and range ring display 250 depict example outputs on display device 108 of system 100. An advantage of such an implementation is that the user of system 100 can easily determine the range of the aircraft in various conditions. In the implementation of range ring display 200, the user can easily determine how the aircraft landing gear and the aircraft wing flaps will affect the range of the aircraft. Thus, in a scenario where either the landing gear and/or the aircraft wing flaps are stuck in a deployed position, the aircraft operator can determine which waypoints are within range. Further, in a landing condition, the aircraft operator can use such information to determine when to deploy the landing gear and/or the aircraft wing flaps such that the aircraft does not overshoot the landing target and also does not fall short of the landing target. Similarly, in the implementation of range ring display 250, the user can easily determine how the deployment of the speed brake/spoiler will affect the range of the aircraft.

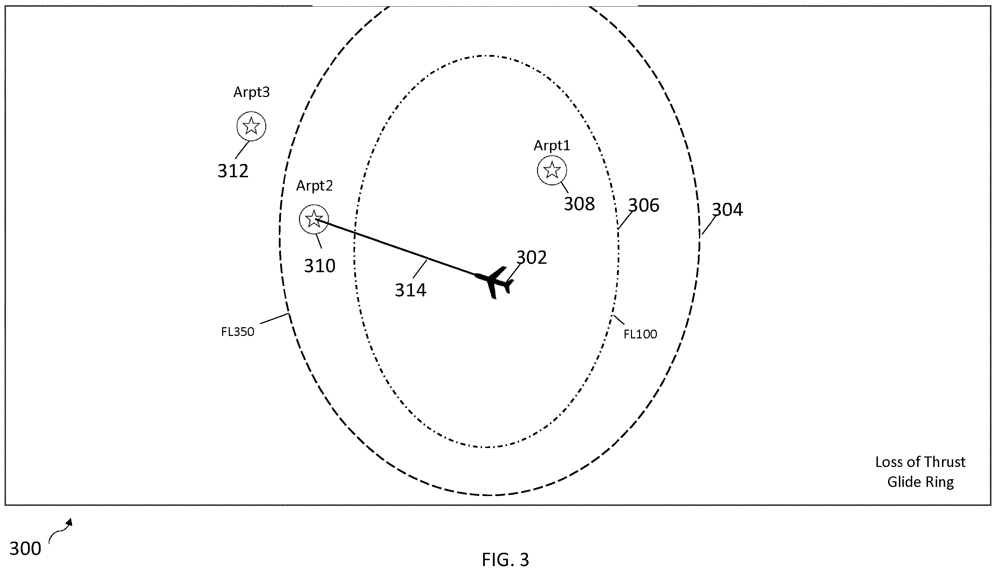

FIG. 3 is an example embodiment of a plurality of displayed glide rings as displayed on glide ring display 300. Glide ring display 300 can be, for example, an output displayed on display device 108 of system 100. Glide ring display 300 includes aircraft icon 302, range ring 304, range ring 306, waypoint 308, waypoint 310, waypoint 312, and trajectory line 314.

Glide ring display 300 is intended to illustrate an example scenario wherein the aircraft has lost power and hence must make an emergency landing via gliding. The two displayed range rings are indicative of various flight levels under which the gliding can occur. Glide ring 304 depicts a flight level of 350 (i.e., 35,000 feet). Glide ring 306 depicts a flight level of 100 (i.e., 10,000 feet). As depicted, the range of the aircraft is greater when at a higher flight level and lesser when at a lower flight level. Further, the glide rings are ovular in shape, to indicate that the glide rings can vary based upon the wind direction and speed. Parameters such as wind direction and speed can be measured, for example, by sensors connected within aircraft data module 102 and be used for the calculation and generation of guide rings 304 and 306.

Aircraft icon 302 is indicative of a position of the aircraft. Trajectory line 314 indicates the trajectory of the aircraft. Waypoint 310 is indicative of an airport labeled Airport 2. Waypoint 308 is indicative of an airport labeled Airport 1. Waypoint 312 is indicative of an airport labeled Airport 3. The depicted range rings (i.e., range rings 304 and 306) indicate the range of the aircraft based on the conditions, and thus the position of the waypoints (i.e., waypoints 308, 310, and 312) relative to the range rings indicate which waypoints are reachable under which conditions.

As depicted, both waypoints 308 and 310 are within range ring 304, while waypoint 312 is outside of range ring 304. Thus, in a loss of thrust condition where the flight level is 350 (FL350), waypoints 308 and 310 are within the aircraft range while waypoint 312 is out of the aircraft range. Waypoint 310 is contained within range ring 304, but is external to range ring 306. Thus, waypoint 310 is reachable in a loss of thrust condition at a FL350, but is not reachable in a loss of thrust condition at a flight level of 100 (FL100). Waypoint 308 is contained within all the depicted range rings (i.e., range ring 304 and range ring 306). Thus, waypoint 308 is reachable in a loss of thrust condition at both FL100 and FL350. Therefore, in a situation where the aircraft is in a loss of thrust condition and is gliding at FL100, the aircraft operator would be informed that waypoint 308 is the only destination available to land the aircraft and can then change trajectory line 314 from waypoint 310 to waypoint 308.

Glide ring display 300 depicts an example display on display device 108 of system 100. An advantage of such an implementation is that the user of system 100 can easily determine the range of the aircraft in an emergency condition where the aircraft operator must find a place to safely land the aircraft. Further, the glide rings account for factors such as wind speed and wind direction, thereby enhancing the accuracy of the depicted range over applications that would only rely on available fuel reserves. Such calculations are critical in emergency situations wherein accuracy of the range of the aircraft is critical to finding a landing site. While the depiction of glide ring display 300 demonstrates varying flight levels, it is understood that depictions can be generated for any other combination of aircraft conditions and/or configurations. Thus, the aircraft operator can use such information to determine a landing strategy including possible re-routing to land at a waypoint that is within the operational range of the aircraft.

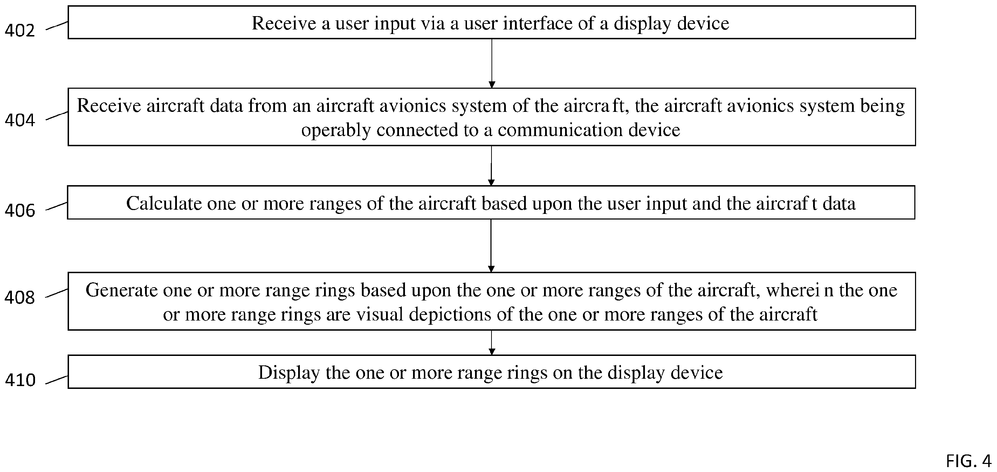

FIG. 4 is a flowchart depicting method 400 for generating and displaying one or more range rings. In the description of method 400, reference will be made to the component numbers of system 100 for clarity.

Method 400 begins at step 402, wherein processor 106 receives a user configuration input via user interface 114 of display device 108. The user configuration input can include aircraft conditions and/or configurations. The user configuration input can specify aircraft conditions including but not limited to airspeed, altitude, and air pressure. The user configuration input can specify aircraft configurations including but not limited to landing gear position, wing flap position, and speed brake position. In some embodiments, the user selects from preset categories representing predefined aircraft statuses.

At step 404, processor 106 receives aircraft data from aircraft data module 102 via communication device 110. Data received from aircraft data module 102 can be indicative of the current state of the aircraft as determined by a network of sensors and computers within an aircraft avionics system. In some examples, aircraft data module 102 returns parameters such as the wind speed and wind direction in order to aid in the determination of the aircraft range.

At step 406, processor 106 calculates one or more ranges of the aircraft based upon the user configuration input and the aircraft data. At step 408, processor 106 generates one or more range rings based upon the one or more ranges of the aircraft. The one or more range rings are visual depictions of the one or more ranges of the aircraft. The one or more range rings can be generated as an overlay such that the multiple range rings are displayed on the same image and with the same scale. Processor 106 can also generate visual indicia of waypoints including airports that are within range as an overlay.

At step 408, display device 108 displays the one or more range rings. Display device 108 can be housed within the cockpit and additionally or alternatively can include tablets or an electronic flight bag (EFB).

The techniques of this disclosure allow for an aircraft operator to obtain multiple accurate ranges of the aircraft based upon custom parameters and/or measured parameters, and to view those ranges as a visual depiction. The techniques of this disclosure are particularly beneficial due to the ability to accurately depict the range of the aircraft beyond simply accounting for fuel reserves. Further, the aircraft operator is able to specify exactly which parameters should be considered when generating the range rings, thereby presenting the aircraft operator with valuable personalized information.

### Discussion of Possible Embodiments

The following are non-exclusive descriptions of possible embodiments of the present invention.

A system for generating and displaying one or more range rings on an aircraft includes a processor. The system further includes a display device operably connected to the processor, the display device comprising a user interface. The system further includes a communication device operably connected to the processor. The system further includes computer-readable memory operably connected to the processor, the computer-readable memory encoded with instructions that, when executed by the processor, cause the system to perform the following steps. The system receives a user configuration input via the user interface of the display device. The system calculates one or more ranges of the aircraft based upon the user configuration input and the aircraft data. The system generates one or more range rings based upon the one or more ranges of the aircraft, wherein the one or more range rings are visual depictions of the one or more ranges of the aircraft. The system displays the one or more range rings on the display device.

The system of the preceding paragraph can optionally include, additionally and/or alternatively, any one or more of the following features, configurations and/or additional components:

A further embodiment of the foregoing system, wherein the one or more visual depictions of the one or more ranges of the aircraft are displayed as overlays on the display device.

A further embodiment of any of the foregoing systems, wherein the computer-readable memory is further encoded with instructions that, when executed by the one or more processors, cause the system to calculate a current range of the aircraft based upon a current flight condition, wherein the current flight condition is based upon the aircraft data, generate a visual depiction of the current range of the aircraft, and display the visual depiction of the current range of the aircraft on the user interface within the display device.

A further embodiment of any of the foregoing systems, wherein the current flight condition includes an indication of an engine health and/or cabin pressure status of the aircraft.

A further embodiment of any of the foregoing systems, wherein the user configuration input includes a landing gear configuration, an aircraft wing configuration, an altitude, and/or an airspeed.

A further embodiment of any of the foregoing systems, wherein the computer-readable memory is further encoded with instructions that, when executed by the one or more processors, cause the system to generate a visual depiction of waypoint markers, wherein the waypoint markers are indicative of landing site, and display the visual depiction of the waypoint markers on the user interface within the display device.

A further embodiment of any of the foregoing systems, wherein the visual depiction of the waypoint markers are displayed as overlays in relation to the visual depiction of the one or more range rings on the display device.

A further embodiment of any of the foregoing systems, wherein the visual depiction of the range of the aircraft is a glide ring when the user configuration input and/or aircraft data indicate a zero-thrust condition .

A further embodiment of any of the foregoing systems, wherein the glide ring indicates how far the aircraft can glide based upon the user configuration input and the aircraft data.

A further embodiment of any of the foregoing systems, wherein the glide ring is shaped based upon a wind condition received from the aircraft data.

A further embodiment of any of the foregoing systems, wherein the display device is housed within a cockpit of the aircraft and is viewable by an aircraft operator.

A further embodiment of any of the foregoing systems, wherein the display device is an electronic flight bag (EFB).

A method for generating and displaying one or more range rings on an aircraft includes receiving a user configuration input via a user interface of a display device. The method further includes receiving aircraft data from an aircraft avionics system of the aircraft, the aircraft avionics system being operably connected to a communication device. The method further includes calculating one or more ranges of the aircraft based upon the user configuration input and the aircraft data. The method further includes generating the one or more range rings based upon the one or more ranges of the aircraft, wherein the one or more range rings are visual depictions of the one or more ranges of the aircraft. The method further includes displaying the one or more range rings on the display device.

A further embodiment of the foregoing method, wherein the one or more visual depictions of the one or more ranges of the aircraft are displayed as overlays on the display device.

A further embodiment of any of the foregoing methods, wherein .

A further embodiment of any of the foregoing methods, further comprising calculating a current range of the aircraft based upon a current flight condition, wherein the current flight condition is based upon the aircraft data, generating a visual depiction of the current range of the aircraft, and displaying the visual depiction of the current range of the aircraft on the user interface within the display device.

A further embodiment of any of the foregoing methods, wherein the current flight condition includes an indication of an engine health and/or cabin pressure status of the aircraft.

A further embodiment of any of the foregoing methods, wherein the user configuration input includes a landing gear configuration, an aircraft wing configuration, an altitude, and/or an airspeed.

A further embodiment of any of the foregoing methods, further comprising generating a visual depiction of waypoint markers, wherein the waypoint markers are indicative of landing sites, displaying the visual depiction of the waypoint markers on the user interface within the display device.

A further embodiment of any of the foregoing methods, wherein the visual depiction of the waypoint markers are displayed as overlays in relation to the visual depiction of the one or more range rings on the display device.

A further embodiment of any of the foregoing methods, wherein the visual depiction of the range of the aircraft is a glide ring when the user configuration input and/or aircraft data indicate a zero-thrust condition and wherein the glide ring is indicative of how far the aircraft can glide based upon the user configuration input and the aircraft data

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for generating and displaying one or more range rings on an aircraft, the system comprising:
a processor (106);
a display device (108) operably connected to the processor (106), the display device (108) comprising a user interface;
a communication device (118) operably connected to the processor (106); and
computer-readable memory operably connected to the processor (106), the computer-readable memory encoded with instructions that, when executed by the processor (106), cause the system to:
receive a user configuration input via the user interface of the display device (108);
receive aircraft data from an aircraft avionics system of the aircraft operably connected to the communication device (118);
calculate one or more ranges of the aircraft based upon the user configuration input and the aircraft data;
generate the one or more range rings based upon the one or more ranges of the aircraft, wherein the one or more range rings are visual depictions of the one or more ranges of the aircraft; and
display the one or more range rings on the display device (108).

2. The system of claim 1, wherein the one or more visual depictions of the one or more ranges of the aircraft are displayed as overlays on the display device (108).

3. The system of claim 1, wherein the computer-readable memory is further encoded with instructions that, when executed by the one or more processor (106)s, cause the system to:
calculate a current range of the aircraft based upon a current flight condition, wherein the current flight condition is based upon the aircraft data, and optionally wherein the current flight condition includes an indication of whether an engine is inoperative and/or cabin pressure status of the aircraft;
generate a visual depiction of the current range of the aircraft; and
display the visual depiction of the current range of the aircraft on the user interface within the display device (108).

4. The system of claim 1, wherein the user configuration input includes a landing gear configuration, an aircraft wing configuration, an altitude, and/or an airspeed.

5. The system of claim 1, wherein the computer-readable memory is further encoded with instructions that, when executed by the one or more processor (106)s, cause the system to:
generate a visual depiction of waypoint markers, wherein the waypoint markers are indicative of landing sites; and
display the visual depiction of the waypoint markers on the user interface within the display device (108).

6. The system of claim 5, wherein the visual depiction of the waypoint markers is displayed as overlays in relation to the one or more range rings on the display device (108).

7. The system of claim 1, wherein the visual depiction of the range of the aircraft is a glide ring corresponding to the user configuration and/or aircraft data indicating a zero-thrust condition, wherein the glide ring indicates how far the aircraft can glide based upon the user configuration input and the aircraft data, and optionally wherein the glide ring is shaped based upon a wind condition received from the aircraft data.

8. The system of claim 1, wherein:
the display device (108) is housed within a cockpit of the aircraft and is viewable by an aircraft operator; and/or
the display device (108) is an electronic flight bag (EFB).

9. A method for generating and displaying one or more range rings on an aircraft, the method comprising:
receiving a user configuration input via a user interface of a display device (108);
receiving aircraft data from an aircraft avionics system of the aircraft, the aircraft avionics system being operably connected to a communication device (118);
calculating one or more ranges of the aircraft based upon the user configuration input and the aircraft data;
generating the one or more range rings based upon the one or more ranges of the aircraft, wherein the one or more range rings are visual depictions of the one or more ranges of the aircraft; and
displaying the one or more range rings on the display device (108).

10. The method of claim 9, wherein the one or more visual depictions of the one or more ranges of the aircraft are displayed as overlays on the display device (108).

11. The method of claim 10, further comprising:
calculating a current range of the aircraft based upon a current flight condition, wherein the current flight condition is based upon the aircraft data, and optionally wherein the current flight condition includes an indication of whether an engine is inoperative and/or cabin pressure status of the aircraft;
generating a visual depiction of the current range of the aircraft; and
displaying the visual depiction of the current range of the aircraft on the user interface within the display device (108).

12. The method of claim 9, wherein the user configuration input includes a landing gear configuration, an aircraft wing configuration, an altitude, and/or an airspeed.

13. The method of claim 9, further comprising:
generating a visual depiction of waypoint markers, wherein the waypoint markers are indicative of landing sites; and
displaying the visual depiction of the waypoint markers on the user interface within the display device (108).

14. The method of claim 13, wherein the visual depiction of the waypoint markers is displayed as overlays in relation to the one or more range rings on the display device (108).

15. The method of claim 9, wherein the visual depiction of the range of the aircraft is a glide ring corresponding to the user configuration and/or aircraft data indicating a zero-thrust condition, wherein the glide ring is indicative of how far the aircraft can glide based upon the user configuration input and the aircraft data, and optionally wherein the glide ring is shaped based upon a wind condition received from the aircraft data.
